# EUROPEAN PATENT APPLICATION

(11) **EP 2 372 812 A1**
(43) Date of publication of application: **05.10.2011**
(21) Application number: 11160601.8
(22) Date of filing: 31.03.2011
(51) Int. Cl.: H01M 2/16

(54) **Separation membrane for battery, and battery with such membrane**

(30) Priority: 02.04.2010 JP 2010086357
(71) Applicant: Nippon Sheet Glass Company, Limited, Tokyo 108-6321 (JP)
(72) Inventor: Ino, Juichi, Tokyo Tokyo 108-6321 (JP); Emori, Ikuko, Tokyo Tokyo 108-6321 (JP)
(74) Representative: Körfer, Thomas

(57) **Abstract**

An object of the present invention is to provide a separation membrane for a battery, which is excellent in heat resistance, does not expand and shrink depending on a temperature history, has no problem that, even when pressure is applied at a point due to external pressure, dendrite growth or the like, it is broken at the pressure point and its function is damaged at the broken part, and has no problem that the ionic conductivity decreases to decrease the battery performance, and to provide a battery equipped with such a separation membrane for a battery.

A separation membrane for a battery which is constructed by binding a scaly inorganic porous material comprising silica, alumina or the like with a binder in a membrane shape, the separation membrane for a battery being provided on the surface of a positive electrode, a negative electrode or a separator of a battery.

## Description

### BACKGROUND OF THE INVENTION

### 1. Field of the Invention

The present invention relates to a separation membrane comprising a scaly inorganic porous material for use in a battery to separate a positive electrode and a negative electrode from each other in a variety of batteries such as a lithium battery. The invention is also relates to batteries using the separation membrane for a battery.

### 2. Description of the Related Art

In a variety of batteries including a lithium battery, it is essential to use a separator for separating the positive electrode and the negative electrode from each other. As for the separator, those comprising an organic material have so far been known, but since they have no heat resistance, they are likely to burn and cause short-circuit and may explode in some cases. Further, there is a disadvantage that they expand and shrink depending on temperature history, resulting in making it impossible to hold the electrolyte. Even when a heat-resistant resin is used, there is another problem that it is still flammable and very expensive and it is difficult to control the shrinking.

JP-T-2007-509464 (Patent Document 1) proposes the formation of an inorganic membrane on the surface of an organic separator. In this method, however, though burning can be controlled, there is a problem that, when pressure is applied at a point due to external pressure, dendrite growth, or the like, the separator is broken at the pressure point and the function of the inorganic membrane is damaged at the broken part. Further, it poses a problem in that the ionic conductivity is decreased to decrease the battery performance.

It is also proposed to add an inorganic powder frit to an organic separator. In this method, however, the heat resistance is not so improved practically, and there is no meltdown protective function because the particles are fluidized at the same time during resin melting. In addition, when a large amount of an inorganic material is added in order to solve these problems, the migration of lithium ions is blocked to decrease the battery performance, which poses another problem. Reduction of the amount of the inorganic powder frit to be added poses another problem in that the function of short-circuit protection becomes insufficient.

JP-T-2009-517810 (Patent Document 2) proposes to add a porous inorganic granular frit to an organic separator to secure the pathway for migration of ions. In this method, however, since a large amount of a binder is required for mixing the porous inorganic granular frit, the amount of the frit cannot be increased; thus, when a pressure is applied at a point, the granular frit is pushed away, resulting in making it impossible to prevent short-circuit and the like, unfavorably.

In this situation, the addition of an inorganic scaly flake to an organic separator is proposed in JP-A-2008-66094 (Patent Document 3). This separator is advantageous in that it hardly burns, hardly shrinks, and the layered flake is not pushed away even when pressure is applied at a point, thereby suppressing short-circuit, and further it can easily be produced as the scaly flake is aligned naturally during the production of the membrane. In this method, however, there is a problem that the migration of lithium ions is blocked in proportion to the amount of the inorganic material to be added, causing decrease of the battery performance. There is a problem that reduction of the amount of the inorganic material to be added decreases the function of short-circuit protection and the like.

### SUMMARY OF THE INVENTION

An object of the invention is to provide a separation membrane for a battery which is excellent in heat resistance, does not expand and shrink depending on a temperature history, has no problem that, even when pressure is applied at a point due to external pressure, dendrite growth and the like, it is broken at the pressure point and its function is damaged at the broken part, and has no problem that the ionic conductivity decreases to decrease the battery performance, and to provide a battery comprising such a separation membrane for a battery.

The present inventors worked assiduously to solve the problems described above and found that the use of a porous separation membrane in which scaly inorganic porous materials are arranged in layers to separate a positive electrode from a negative electrode leads to the solution of the problems.

That is, a separation membrane for a battery according to the invention comprises a scaly inorganic porous material bound with a binder in a membrane shape.

In the separation membrane for a battery, the scaly inorganic porous material may be silica or alumina.

In the separation membrane for a battery, the average pore size of the scaly inorganic porous material may be from 0.05 to 1 µm.

In the separation membrane for a battery, the porosity of the scaly inorganic porous material may be from 50 to 90%.

In the separation membrane for a battery, the aspect ratio of the scaly inorganic porous material may be from 5 to 100.

In the separation membrane for a battery, the thickness of the scaly inorganic porous material may be from 0.05 to 5 µm.

In the separation membrane for a battery, the compounding ratio of the binder per from 98 vol% to 40 vol% of the scaly inorganic porous material may be from 2 vol% to 60 vol%.

The separation membrane for a battery may be formed on at least one of surfaces of a positive electrode, a negative electrode and a separator.

A battery according to the invention comprises the separation membrane for a battery described above.

Since the scaly inorganic porous material constituting the separation membrane for a battery is in a scaly form, the positive electrode can be separated from the negative electrode with no fluidity under heating to enhance the safety. Moreover, the performance as a battery can be maintained while securing the safety without damaging the ionic conductivity because of its porous property. In addition, it is possible to shorten the distance between the electrodes by coating the scaly inorganic porous material on the positive electrode or the negative electrode. Thus, a low resistant battery, namely, high output battery can be provided. When this type of the separation membrane for a battery is formed, the electrodes can be separated from each other without using a separator. In addition, the scaly inorganic porous material does not burn, expand and shrink because it is an inorganic material. The added scaly inorganic porous material is not pushed away even when pressure is applied at a point and can serve to prevent short-circuit. When it is mixed with an organic material, a shutdown function (when much resin is used) and a meltdown protective function are maintained, and it can be bent since the scaly inorganic porous material has been mixed.

### BRIEF DESCRIPTION OF DRAWINGS

The figure shows a schematic diagram of an apparatus for measuring a short-circuit resistant property.

### DETAILED DESCRIPTION OF THE INVENTION

The following will explain an embodiment of the invention.

A separation membrane for a battery according to the invention is formed by binding a scaly inorganic porous material with a binder. There is no particular limitation in the scaly inorganic porous material as far as it is an inorganic material having no influence on the battery characteristic, and examples of which include silica, alumina, quartz, zirconia, and glass; and silica and alumina are preferred.

The average pore size of the scaly inorganic porous material is preferably in a range of from 0.05 to 1 µm, and more preferably in a range of from 0.1 to 0.5 µm. The reason is: when the average pore size is too large, the product becomes structurally weak and the number of pores decreases to decrease the porosity; and when the average pore size is too small, the permeation of the electrolyte becomes worse.

The porosity of the scaly inorganic porous material is preferably from 50 to 90%, and more preferably from 60 to 80%. The reason is: when the porosity is too large, the strength becomes weak, and when the porosity is too small, the ionic conductivity decreases. In this connection, the form of pore is preferably through-hole, and preferably not straight but curved hole.

The aspect ratio of the scaly inorganic porous material is preferably more than 5, more preferably more than 10. The reason is that the scaly inorganic porous materials have to be orientated in the separation membrane for a battery in order to be layered overlapping each other. The upper limit of the aspect ratio of the scaly inorganic porous material is preferably about 100. When the aspect ratio is too large, the same harmful effect as in the so far used inorganic membrane occurs.

The thickness of the scaly inorganic porous material is preferably from 0.05 to 5 µm, more preferably from 0.1 to 1 µm. The reason is: when it is too thick, the scaly inorganic porous material cannot be layered in the separation membrane for a battery to protrude sometimes from the separation membrane for a battery in an inclined state; and when it is too thin, the strength is lost and the separation membrane for a battery cannot be produced.

As for the compounding ratio of the scaly inorganic porous material and the binder, the scaly inorganic porous material is preferably used in an amount of from 98 vol% to 40 vol%, and the binder in an amount of from 2 vol% to 60 vol%; and the scaly inorganic porous material is preferably used in an amount of from 95 vol% to 60 vol%, and the binder in an amount of from 5 vol% to 40 vol%. The reason is: when the scaly inorganic porous material is over 98 vol%, it is difficult to form a membrane on the surface of the electrode because almost no binder is contained; when the scaly inorganic porous material is less than 40 vol%, the ionic conductivity is decreased, namely, the electric resistance is increased because the binder component is too much, resulting in decrease of the characteristics as battery.

There is no particular limitation in the binder, and it is preferable to use a heat-resistant resin, an inorganic binder.

The thickness of the separation membrane for a battery is preferably in a range of from 1 µm to 100 µm. The reason is: when the thickness is less than 1 µm, a hole as a defect is readily produced on the separation membrane to possibly cause short-circuit; and when the thickness is over 100 µm, the resistance between the electrodes is increased to decrease the performance as battery.

In addition, the thickness of the separation membrane for a battery is preferably in a range of from 10 µm to 100 µm. The reason is: when the thickness is less than 10 µm, a hole as a defect is readily produced on the separation membrane to inhibit complete elimination of a possibility of short-circuit; and when the thickness is over 100 µm, the resistance between the electrodes is increased to decrease the performance as battery.

In order to produce the separation membrane for a battery according to the invention, the scaly inorganic porous material may be mixed with a binder and applied on a separator or an electrode to form a membrane thereon.

In order to produce the scaly inorganic porous material constituting the separation membrane for a battery, for example, a high-density polyethylene is first mixed with silica powder and paraffin-type mineral oil at a predetermined ratio, the mixture is heated at a predetermined temperature and molded into a sheet shape, and the mineral oil is eluted with a proper solvent. The resulting porous precursor in a sheet shape is immersed in a water glass diluted solution, dried and burned to yield a silica porous sheet. This is ground to yield a scaly inorganic porous material.

As for the electrolyte constituting the battery according to the invention, any kind of electrolytes generally utilized may be used, including a non-aqueous electrolysis solution, an ionic liquid, and a polymer electrolyte. In view of the safety, the use of an ionic liquid or polymer electrolyte is preferred. When the separation membrane for a battery according to the invention is used, since it is not necessary to use a separator or it is possible to make the thickness of the separation membrane thin, an ionic liquid or polymer electrolyte which has a low ionic conductivity but high safety can also be utilized. Additionally, a porous material may be impregnated with a solid electrolyte to use as an inorganic solid electrolyte having a skeletal structure.

### Examples

The invention will be explained in detail by way of Examples and Comparative Examples.

### Example 1

First, a scaly inorganic porous material was produced in the following manner.

A high-density polyethylene was first mixed with silica powder and paraffin-type mineral oil at the ratio of 1 : 1 : 2 (by weight), the mixture was heated at 200°C, and molded into a sheet shape, from which the mineral oil was eluted with a solvent (n-propyl bromide) to yield a porous precursor in a sheet shape of 5 µm in thickness. Then, this porous precursor was immersed in a water glass no.3 100 diluted solution, then dried, and burned at 900°C to yield a silica porous sheet. This silica porous sheet was ground to yield a scaly inorganic porous material. The obtained scaly inorganic porous material was observed under an electron microscope (Keyence VE9800), indicating that it was composed of about 1 µm in thickness, 20 µm in the average particle size and the aspect ratio 20, having through-holes of about from 0.1 to 0.5 µm in the average pore size. The specific gravity was about 0.5 and the porosity was about 80%.

Then, the copolymer of vinylidene fluoride (PVDF) and hexafluoropropylene (HFP) (ARKEMA Co., KYNAR FLEX2800) was dissolved in N-methylpyrrolidone (NMP) to prepare a 1% by mass solution of PVDF/HFP.

A lithium cobaltate positive electrode (one side coating, volume 1.5 mAh/cm²; Piotrek Co., Ltd.) as a positive electrode and a graphite negative electrode (one side coating, volume 1.6 mAh/cm²; Piotrek Co., Ltd.) as a negative electrode were prepared by cutting out into 2 cm × 2 cm.

The scaly inorganic porous material (9.5 g) was mixed well into 100 g of the 1% by mass solution of PVDF/HFP as prepared above (the volume ratio of the scaly inorganic porous material was about 90 vol% in the solid portion) and coated on the positive electrode by an applicator to form a membrane of 50 µm in thickness. This was dried at 150°C to form a coat of 5 µm thickness on the positive electrode. The coated positive electrode was combined with the negative electrode cut out as described above and sealed in a laminate film together with an electrolyte to produce a battery.

### Example 2

In the same manner as in Example 1, a lithium cobaltate positive electrode (one side coating, volume 1.5 mA h/cm²; Piotrek Co., Ltd.) as a positive electrode and a graphite negative electrode (one side coating, volume 1.6 mA h/cm²; Piotrek Co., Ltd.) as a negative electrode were prepared by cutting out into 2 cm × 2 cm.

The scaly inorganic porous material (1.5 g) was mixed well into 200 g of a 1% by mass solution of PVDF/HFP as prepared in Example 1 (the volume ratio of the scaly inorganic porous material was about 60 vol% in the solid portion) and coated on the positive electrode by an applicator to form a membrane of 200 µm in thickness. This was dried at 150°C to form a coat of about 5 µm thickness on the positive electrode. The coated positive electrode was combined with the negative electrode cut out as described above and sealed in a laminate film together with an electrolyte in the same manner as in Example 1 to produce a battery.

### Example 3

As for a separator, a polyethylene separator #2400 (Celgard LLC) of 20 µm in thickness was prepared by cutting out into 2.5 cm × 2.5 cm. The porosity of the separator was about 40%.

The scaly inorganic porous material (9.5 g) was mixed well into 100 g of the 1% by mass solution of PVDF/HFP as prepared in Example 1 (the volume ratio of the scaly porous material was about 60 vol% in the solid portion) to yield a slurry, into which the above-prepared polyethylene separator was dipped to coat the slurry thereon. After drying at 100°C, the separator of 25 µm in thickness was obtained.

The separator was appropriately combined with the positive electrode and the negative electrode prepared in Example 1 and sealed in a laminate film together with an electrolyte to produce a battery.

### Comparative Example 1

As for a separator, a polyethylene separator #2400 (Celgard LLC) of 20 µm in thickness was prepared by cutting out into 2.5 cm × 2.5 cm.

The positive electrode and the negative electrode prepared in Example 1 were combined appropriately and sealed in a laminate film together with an electrolyte to produce a battery.

### Comparative Example 2

An aqueous slurry of silica as scaly particles (100 g) (solid content concentration 15% by mass; aspect ratio 50; the average particle size 0.5 µm), SBR latex as a binder (11 g) (solid content concentration 3% by mass) and water (100 g) were placed in a vessel and stirred for 1 hour to yield a homogeneous slurry. In the slurry was dipped a polyethylene separator #2400 (Celgard LLC) used in Comparative Example 1 to coat the slurry thereon. After drying at 100°C, the separator of 25 µm in thickness was obtained.

The separator was combined appropriately with the positive electrode and the negative electrode prepared in Example 1 and sealed in a laminate film together with an electrolyte to produce a battery.

### Comparative Example 3

Silica as inorganic particles (100 g) (the average particle size 3 µm), SBR latex as a binder (11 g) (solid content concentration 3% by mass) and water (100 g) were placed in a vessel and stirred for 1 hour to yield a homogeneous slurry. In the slurry was dipped a polyethylene separator #2400 (Celgard LLC) used in Comparative Example 1 to coat the slurry thereon. After drying at 100°C, the separator of 25 µm in thickness was obtained.

The separator was combined appropriately with the positive electrode and the negative electrode prepared in Example 1 and sealed in a laminate film together with an electrolyte to produce a battery.

The nonaqueous secondary batteries produced in Examples 1 to 3 and Comparative Examples 1 to 3 were subjected to the following tests. Table 1 shows the results.

### [Evaluation of Resistance]

The resistance (Ω) was measured by an impedance analyzer by means of an alternating current four-terminal method as for the produced batteries.

### [Measurement of Short-Circuit Resistance]

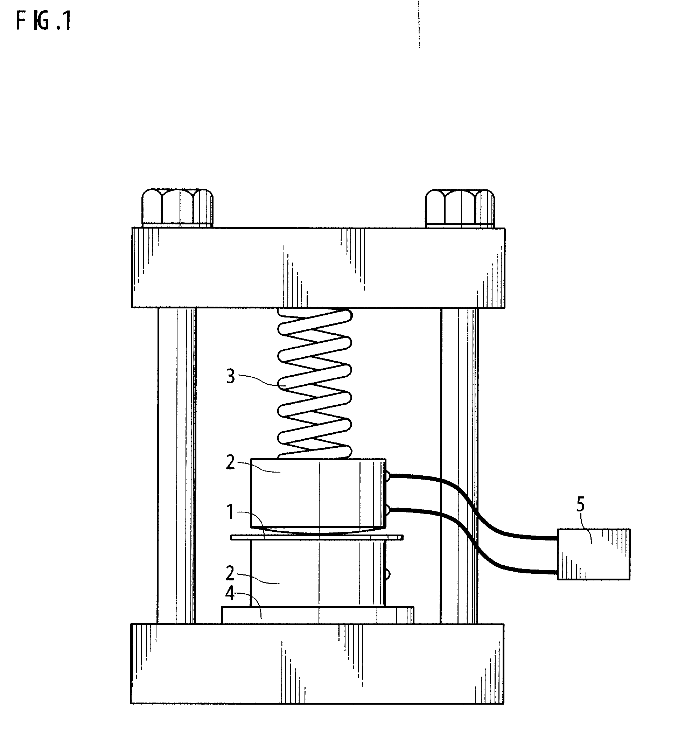

Short-circuit resistance was measured using a short-circuit resistance measuring apparatus as shown in Fig. 1. In the short-circuit resistance measuring apparatus, as shown in Fig. 1, a laminated battery 1 was put between the stainless columns 2 of 50 mm in diameter from the upper and lower sides, to which the pressure of 0.14 kg/cm² is applied with a spring 3. The upper and lower stainless columns 2 and 2 are insulated electrically by a heat-resistant insulating plate 4. The upper stainless column 2 is formed into the surface having such a curvature that the separator can be expelled during application of pressure. The measuring apparatus is placed in a programmed high temperature bath, which is heated up from room temperature to 200°C over a period of 2 hours; when the temperature reaches at such a high temperature that the porous membrane dissolves or burns, a pressure is generated between the positive electrode and the negative electrode and the electrolyte is fluidized or expelled to cause short-circuit of the electrodes; short-circuit is determined by a resistance measuring apparatus 5, and the short-circuit resistance was evaluated at the temperature at which short-circuit occurred.

**Table 1**

| | Resistance | Short-Circuit Temperature |
|---|---|---|
| Example No. | [Ω] | [C°] |
| Example 1 | 2 | over 200 |
| Example 2 | 4 | over 200 |
| Example 3 | 22 | over 200 |
| Comparative Example 1 | 19 | 120 |
| | 81 | over 200 |
| Comparative Example 2 | 47 | 150 |
| Comparative Example 3 | | |

Table 1 indicates the following facts.

As seen from the results of Examples and Comparative Examples, it is apparent that the distance between the electrodes is shorter and the porosity is larger in Examples 1 and 2 of the invention than in Comparative Examples 1 to 3, resulting in lowering the resistance. In addition, the short-circuit temperature is improved since the scaly inorganic porous material is used.

From Example 3 and Comparative Example 2, it is elucidated that the lower resistance is dependent on the porosity irrespective of the use of the same scaly filler. It is also elucidated from Comparative Example 3 that when the resin temperature is over the dissolving temperature, the filler is fluidized along with the resin to disturb protection of short-circuit since the filler is granulated.

## Claims

1. A separation membrane for a battery which comprises a scaly inorganic porous material bound with a binder in a membrane shape.

2. A separation membrane for a battery as claimed in Claim 1, wherein the scaly inorganic porous material is silica or alumina.

3. A separation membrane for a battery as claimed in Claim 1 or 2, wherein the average pore size of the scaly inorganic porous material is from 0.05 to 1 µm.

4. A separation membrane for a battery as claimed in any one of Claims 1 to 3, wherein the porosity of the scaly inorganic porous material is from 50 to 90%.

5. A separation membrane for a battery as claimed in any one of Claims 1 to 4, wherein the aspect ratio of the scaly inorganic porous material is from 5 to 100.

6. A separation membrane for a battery as claimed in any one of Claims 1 to 5, wherein the thickness of the scaly inorganic porous material is from 0.05 to 5 µm.

7. A separation membrane for a battery as claimed in any one of Claims 1 to 6, wherein the compounding ratio of the binder per from 98 vol% to 40 vol% of the scaly inorganic porous material is from 2 vol% to 60 vol%.

8. A separation membrane for a battery as claimed in any one of Claims 1 to 7, wherein the separation membrane for a battery is formed on at least one of surfaces of a positive electrode, a negative electrode and a separator of a battery.

9. A battery comprising a separation membrane for a battery as claimed in any one of Claims 1 to 8.
